# EUROPÄISCHE PATENTANMELDUNG

(11) **EP 4 764 390 A1**
(43) Veröffentlichungstag der Anmeldung: **24.06.2026**
(21) Anmeldenummer: 24222995.3
(22) Anmeldetag: 23.12.2024
(51) Int. Cl.: F41H 1/02, F41H 1/04, F41H 5/04

(54) **BALLISTISCHER SCHUTZPANZER SOWIE BALLISTISCHER SCHUTZHELM UND SCHUTZWESTE**

(71) Anmelder: Busch PROtective Germany GmbH & Co. KG, 33334 Gütersloh (DE)
(72) Erfinder: SLUIS Jan, Anna-Böckmann, 33334 Gütersloh (DE)
(74) Vertreter: Seemann & Partner Patentanwälte mbB

(57) **Zusammenfassung**

Ballistischer Schutzpanzer (12), insbesondere als Bestandteil ballistischer Schutzbekleidung oder Kopfbedeckung (10), umfassend ein Textillaminat (14) aus einer Mehrzahl miteinander laminierter Textillagen (16, ..., 34), wobei eine Mehrzahl draht- oder fadenförmiger Verbinder (40, 52) vorgesehen ist, die sich in der Schichtungsrichtung (Z) der textilen Lagen (16, ..., 34) durch das Textillaminat (14) wenigstens teilweise hindurch erstrecken, der dadurch weitergebildet ist, dass eine mittlere Flächendichte von Verbindern (40, 52), insbesondere quer zur Schichtungsrichtung, von zwischen 180 Verbindern / dm² bis 800 Verbindern / dm², insbesondere zwischen 200 Verbindern / dm² bis 700 Verbindern / dm², insbesondere zwischen 250 Verbindern / dm² und 600 Verbindern / dm², insbesondere zwischen 280 Verbindern / dm² und 500 Verbindern / dm², insbesondere zwischen 300 Verbindern / dm² und 450 Verbindern / dm², vorgesehen ist.

## Beschreibung

Die vorliegende Erfindung betrifft einen ballistischen Schutzpanzer gemäß dem Oberbegriff des Anspruchs 1, sowie einen entsprechenden ballistischen Schutzhelm sowie eine Schutzweste.

Ballistische Schutzpanzer der hier vorliegenden Art sind Bestandteil ballistischer Schutzkleidung oder Kopfbedeckungen, wie etwa militärischer Helme, schutzsicherer Westen und dergleichen. Aus Gründen der Gewichtsersparnis werden solche Schutzpanzer in der Regel aus technischen Geweben wie hochmolekularem Polyethylen, Aramid, Kevlar oder anderen hochfesten Garnen hergestellt. Einzelne Gewebelagen werden mit Hilfe einer Klebematrix laminiert, indem ein Kleber, ein Harz oder eine Folie zwischen den einzelnen textilen Lagen aufgebracht wird und das gesamte Lagenpaket anschließend verpresst wird, sodass ein Textillaminat entsteht.

Abhängig von den Materialeigenschaften der für die textilen Lagen verwendeten Garne, den verschiedenen Webarten und Gewebegewichte sowie dem Harz- bzw. Klebstoffanteil in der Verbindungsmatrix können die Eigenschaften des Schutzpanzers variiert werden. Abgesehen von der Gestaltfestigkeit, d.h. der Widerstandsfähigkeit gegenüber Verformungen, die insbesondere bei Schutzhelmen von Bedeutung ist, spielt naturgemäß die Widerstandsfähigkeit gegenüber einem aufprallenden Projektil oder Splitter eine herausragende Rolle. Das aufschlagende Geschoss übt außer einer Kraft in der Schichtungsrichtung, die im Folgenden als Z-Richtung bezeichnet werden soll, auch Kräfte in den Richtungen aus, die innerhalb der Lagenebene liegen, d.h. in der X- und Y-Richtung senkrecht zur Z-Richtung. Diese Kräfte werden durch die Garne oder Fasern der textilen Lagen aufgenommen, während die Kräfte in Z-Richtung durch die Verklebung der textilen Lagen aufgenommen werden. Das bedeutet, dass die Klebekraft der Matrix entscheidend dazu beiträgt, einen Durchschlag des Geschosses zu verhindern. Die Lagenebenen sind typischerweise gebogen, also nicht plan, sodass die X- und Y- Richtung entlang der Lagenebenen zu verstehen sind und nur bei planen Lagenebenen plan sind.

Es ist möglich, die textilen Gewebelagen vollständig in die Matrix einzubetten, sodass die Klebekraft der Lagen aneinander sehr hoch wird. Im Allgemeinen führen die beim Geschossaufprall auftretenden Kräfte in X- und Y-Richtung zu einer Dehnung der Gewebefasern und zu einer Energieabsorption. Hierbei kann eine Ausbeulung des Schutzpanzers in der Aufprallrichtung eintreten. Wird jedoch eine bestimmte Kraft bzw. Längung der Fasern überschritten, so werden die Fasern schlagartig abgeschert und das Geschoss durchschlägt die entsprechende Lage. Dieser Abschereffekt wird durch eine vollständige Einbettung des Gewebes in die Harz- oder Klebstoffmatrix begünstigt, da hierdurch die Möglichkeit der Fasern zur Längsausdehnung beschränkt wird. Der Widerstand gegen eine Perforation des Panzers wird somit verringert. Von diesem Effekt abgesehen, führt ein hoher Harz- oder Klebstoffanteil zu einer Erhöhung des Gewichts des Schutzpanzers.

Daher wurden Versuche unternommen, ballistische Schutzpanzer mit verringertem Harzauftrag zwischen den textilen Schichten zu konstruieren. Hierdurch kann Gewicht eingespart werden, und die Energieabsorption innerhalb der einzelnen textilen Lagen wird erhöht, da die Gewebefasern, die nicht in die Matrix eingebettet sind, sich ungehindert dehnen können. Andererseits wird der Halt der Lagen untereinander verringert. Daher tritt beim Projektileinschlag folgender Effekt auf: Durch den Abschereffekt werden die äußeren textilen Lagen vom Projektil glatt durchschlagen, welches sich hierbei stark verformt. Die darauffolgenden Lagen fangen das Projektil, dessen kinetische Energie an diesem Punkt bereits stark verringert ist, durch die Dehnung der Fasern innerhalb der textilen Lagen ab. Hierbei entsteht eine starke Ausbeulung dieser Fanglagen des Laminats zur Innenseite des Schutzpanzers, da sich die Fanglagen von den perforierten Lagen durch den verminderten Harzauftrag leichter ablösen und eine Delamination zwischen diesen Schichten auftritt. Der starke Ausbeulungseffekt kann jedoch beim Träger der ballistischen Schutzkleidung starke Verletzungen hervorrufen. Beispielsweise kann sich der Träger eines ballistischen Schutzhelms, der durch einen Geschosseinschlag stark nach innen verformt wird, Kopfverletzungen zuziehen.

Bei der Konstruktion eines herkömmlichen ballistischen Schutzpanzers muss also einerseits der eingangs beschriebene Effekt der vollständigen Perforation, andererseits jedoch auch eine übermäßige Verformung der inneren Schichten des Textillaminats verhindert werden. Dies geschieht durch geeignete Abstimmung der Dehnungseigenschaften des Textilgewebes und des Harz- bzw. Klebstoffanteils, sodass die Lastaufnahme in den unterschiedlichen Richtungen vorbestimmt werden kann. Dies ist jedoch nur in eingeschränktem Maße möglich, da zum einen die Bedingungen bei der Herstellung des Schutzpanzers schwer reproduzierbar sind und zum anderen der Delaminationseffekt beim Ablösen der sich verformenden Fanglagen von den perforierten Lagen schlagartig und nahezu unkontrollierbar auftritt. Insbesondere wird die Wahl des Harz- oder Klebstoffanteils in der Verbindungsmatrix durch diese Umstände außerordentlich erschwert.

WO 2005/108906 A1 offenbart einen ballistischen Schutzpanzer, insbesondere als Bestandteil ballistischer Schutzbekleidung oder Kopfbedeckung, umfassend ein Textillaminat aus einer Mehrzahl miteinander laminierter Textillagen, wobei eine Mehrzahl draht- oder fadenförmiger Verbinder vorgesehen ist, die sich in der Schichtungsrichtung der textilen Lagen durch das Textillaminat hindurch erstrecken.

Hierdurch ist es gelungen, ballistische Schutzpanzer zur Verfügung zu stellen, die Durchschläge von Projektilen oder auftreffenden Splittern schon zuverlässig verhindern und gleichzeitig den oben beschriebenen Verformungseffekt auf der der Beschussseite gegenüberliegenden Innenseite des Schutzpanzers auf ein akzeptables Maß reduzieren, während das Gewicht des Schutzpanzers möglichst geringgehalten wird.

Es ist Aufgabe der vorliegenden Erfindung, den ballistischen Schutzpanzer aus dem Stand der Technik derart fortzubilden, dass die Schutzwirkung bei möglichst geringem Gewicht des Schutzpanzers verbessert wird.

Gelöst wird diese Aufgabe durch den Gegenstand des Anspruchs 1. Erfindungsgemäß ist ein ballistischer Schutzpanzer, insbesondere als Bestandteil ballistischer Schutzbekleidung oder Kopfbedeckung, vorgesehen, umfassend ein Textillaminat aus einer Mehrzahl miteinander laminierter textiler Lagen, wobei eine Mehrzahl draht- oder fadenförmiger Verbinder vorgesehen ist, die sich in der Schichtungsrichtung der textilen Lagen durch das Textillaminat wenigstens teilweise hindurch erstrecken, der dadurch weitergebildet ist, dass wenigstens bereichsweise eine mittlere Flächendichte von Verbindern insbesondere quer zur Schichtungsrichtung, von zwischen 180 Verbindern / dm² bis 800 Verbindern / dm², insbesondere zwischen 200 Verbindern / dm² bis 700 Verbindern / dm², insbesondere zwischen 250 Verbindern / dm² und 600 Verbindern / dm², insbesondere zwischen 280 Verbindern / dm² und 500 Verbindern / dm², insbesondere zwischen 300 Verbindern / dm² und 450 Verbindern / dm², vorgesehen ist.
dm bedeutet hierbei Dezimeter.

Vorzugsweise erstrecken sich die Verbinder vollständig durch das Textillaminat. Insbesondere ist die mittlere Flächendichte von Verbindern größer als im Stand der Technik bekannt. Die Erfindung geht hierbei davon aus, dass durch eine höhere mittlere Flächendichte von Verbindern eine Helmschale hergestellt wird, die steifer wird, sodass sich die Restenergie bei Beschuss verringert. Dies erlaubt auf der einen Seite eine geringere Schalenstärke des Schutzpanzers bei gleicher Schutzleistung im Vergleich zum Stand der Technik oder eine höhere Schutzleistung des ballistischen Schutzpanzers, wenn die gleiche Schalenstärke wie bisher im Stand der Technik und das gleiche Gewicht verwendet wird.

Vorzugsweise ist wenigstens bereichsweise eine mittlere Flächendichte von wenigstens 180 Verbindern / dm², insbesondere wenigstens 200 Verbindern / dm², insbesondere wenigstens 250 Verbindern / dm², insbesondere wenigstens 280 Verbindern / dm², insbesondere wenigstens 300 Verbindern / dm² vorgesehen.

Vorzugsweise ist wenigstens bereichsweise eine mittlere Flächendichte von bis zu 800 Verbindern / dm², insbesondere 700 Verbindern / dm², insbesondere 600 Verbindern / dm², insbesondere 500 Verbindern / dm², insbesondere 450 Verbindern / dm² vorgesehen.

Der ballistische Schutzpanzer umfasst insbesondere eine Anzahl draht- oder fadenförmiger Verbinder, die sich in der Schichtungsrichtung durch das Textillaminat hindurch erstrecken, d.h. in der Richtung der Flächennormalen, die senkrecht auf den textilen Lagen steht. Diese Verbinder bieten den einzelnen textilen Lagen des Laminats zusätzlichen Halt aneinander, indem zusätzlich zu der bekannten Klebematrix eine weitere mechanische Verbindung geschaffen wird. Durch Wahl einer geeigneten Zugfestigkeit bzw. Elastizität der Verbinder ist es möglich, die Perforations- und Verformungseigenschaften des Textillaminats und seine Widerstandsfähigkeit gegenüber einem Projektileinschlag zu verbessern.

Insbesondere wird der oben beschriebene Ausbeulungseffekt der beim Projektilaufprall verformten inneren Fanglagen des Laminats stark verringert, da die Verbinder starke Zugkräfte in der Beschussrichtung aufnehmen können und ein unkontrolliertes Abreißen der Lagen voneinander (Delamination) verhindern können. Vielmehr wird der Delaminationseffekt auf das unmittelbare Umfeld des Beschusskanals begrenzt. In diesem Bereich sind die Zugkräfte auf die Verbinder so hoch, dass diese reißen und sich die inneren Fanglagen ablösen können. In den Richtungen innerhalb der Lagen, d. h. in den Richtungen senkrecht zur Schichtungsrichtung, nimmt die Kraft schließlich so weit ab, bis sie die zum Zerreißen der Verbinder erforderliche Kraft unterschreitet, sodass lediglich eine Dehnung der Verbinder auftritt. Hier kann zwar ein Ablösen der Klebeschichten der Lagen voneinander stattfinden, jedoch werden die Lagen durch die gedehnten Verbinder weiter stabil zusammengehalten. Hierdurch wird das Ausmaß der Ausbeulung des Schutzpanzers nach innen und damit das Verletzungsrisiko stark verringert. Eine ausreichende Absorption der kinetischen Geschossenergie findet dennoch statt, sodass das Projektil das Textillaminat nicht vollständig durchschlagen kann. Der Harz- oder Klebstoffanteil im Textillaminat kann stark verringert werden, ohne dass eine übermäßige Verformung auftritt, sodass sich eine Gewichtsersparnis ergibt und der Tragekomfort erhöht wird.

Vorzugsweise ist der Abstand der Verbinder in einer ersten Richtung der Fläche, die quer zur Schichtungsrichtung der textilen Lagen ist, unterschiedlich zu einer zu der ersten Richtung quer, insbesondere senkrecht, angeordneten Richtung der Fläche, die quer zur Schichtungsrichtung der textilen Lagen ist. Hierdurch kann die Sprödigkeit des ballistischen Schutzpanzers verringert werden, wodurch sich die Durchschussneigung verringert.

Wenn vorzugsweise die mittlere Flächendichte von Verbindern im Schutzpanzer unterschiedlich ist, können Bereiche beim ballistischen Schutzpanzer definiert werden, die vorgebbare ballistische Effekte aufweisen.

Eine weitere Lösung der Aufgabe ist ein ballistischer Schutzpanzer, insbesondere als Bestandteil ballistischer Schutzbekleidung oder Kopfbedeckung, umfassend ein Textillaminat aus einer Mehrzahl miteinander laminierter textiler Lagen, wobei eine Mehrzahl draht- oder fadenförmiger Verbinder vorgesehen ist, die sich in der Schichtungsrichtung der textilen Lagen durch das Textillaminat wenigstens teilweise hindurch erstrecken, der dadurch weitergebildet ist, dass der Schutzpanzer in wenigstens zwei Bereichen eine mittlere Flächendichte aufweist, die unterschiedlich zueinander ist.

Wenn die mittlere Flächendichte von Verbindern in einem zentralen Bereich des Schutzpanzers kleiner ist als in einem Randbereich des Schutzpanzers, kann dafür gesorgt werden, dass über den gesamten Bereich des Schutzpanzers eine gleichmäßige Sicherung gegen Projektile oder auftreffende Splitter ermöglicht ist.

Schutzpanzer, beispielsweise Helme, haben üblicherweise am Rand eine höhere Neigung zur Delamination als in Bereichen nahe der Krone bzw. in einem zentralen Bereich des Schutzpanzers. Nahe des zentralen Bereichs des Schutzpanzers bzw. der Krone eines Schutzhelmes ist gemessen zum Abstand des Treffpunktes eines Schusses oder des Auftreffpunktes eines Splitters ähnlich viel Material in X- und Y-Richtung, d.h. in der Fläche, die durch den Schutzpanzer bzw. den Helm aufgespannt wird oder in der Fläche, die durch die textilen Lagen ausgebildet ist. Hierdurch kann sich die Energie des Projektils gleichförmig auf eine größere Fläche verteilen, um Energie zu dissipieren. Am Rand hingegen wird in Richtung Rand weniger Energie zur Delaminierung benötigt, sodass die Helme zum Rand hin oder der Schutzpanzer zum Rand hin größere Ausbeulungen aufweisen. Durch die bevorzugte Variante der Erhöhung der mittleren Flächendichte der Verbinder zum Rand hin kann diesem Effekt entgegengewirkt werden. Damit wird auch zum Rand des Schutzpanzers hin für eine verbesserte Energiedissipation gesorgt.

Vorzugsweise ist die Anzahl der textilen Lagen im Schutzpanzer bereichsweise unterschiedlich. Hierdurch kann bei möglichst geringem Gewicht eine Optimierung der Sicherheit des Schutzpanzers erzielt werden. Wenn die Anzahl der textilen Lagen in einem zentralen Bereich des Schutzpanzers kleiner ist als in einem Randbereich des Schutzpanzers, kann der Sicherheitsaspekt bzw. die Gleichförmigkeit der Dissipation der Energie von auftreffenden Projektilen oder Splittern angepasst werden.

Besonders einfach ist die Herstellung des Schutzpanzers dann, wenn die Verbinder in den textilen Lagen vernäht sind. Beispielsweise ist es möglich, die in einer Prepreg-Form vorliegenden textilen Lagen, also schon mit einer Klebematrix versehene textile Lagen, im feuchten Zustand zu vernähen, sodass die Verbinder im feuchten Zustand der textilen Lagen eingebracht werden. Anschließend wird der Schutzpanzer dann verpresst und ausgehärtet, sodass der mit den Verbindern versehene Schutzpanzer effizient hergestellt werden kann.

Die Aufgabe wird ferner gelöst durch einen ballistischen Schutzhelm mit einer Helmschale, die einen erfindungsgemäßen Schutzpanzer umfasst oder die aus einem erfindungsgemäßen Schutzpanzer besteht.

Ferner wird die Erfindung gelöst durch eine ballistische Schutzweste, die Hartsegmente oder Harteinschübe, die einen erfindungsgemäßen ballistischen Schutzpanzer umfassen oder aus diesem bestehen.

Vorzugsweise sind die Verbinder mit Verankerungseinrichtungen zur Verankerung im Textillaminat versehen. Sehr bevorzugt ist es, wenn die Verbinder elastisch sind. Die Verbinder bestehen oder umfassen vorzugsweise Metall oder ein Kunststoffmaterial.

In einer weiteren Ausgestaltung der Erfindung sind die Verbinder als Verstärkungsfäden ausgebildet, die jeweils aus einer einzelnen Faser oder aus einer Anzahl von Fasern gebildet werden. Insbesondere bevorzugt ist es, wenn die Verstärkungsfäden bzw. die Verbinder aus einem Garn bestehen, das aus einer Anzahl von Fasern gesponnen oder gedrillt ist.

Die Verstärkungsfäden oder Verbinder umfassen oder bestehen aus Aramid, Kevlar, Polyäthylen oder Kohlefasern.

Vorzugsweise sind die Verstärkungsfäden oder Verbinder untereinander zu Endlosfäden verbunden, die das Textillaminat mäandrierend durchlaufen.

In einer Ausführungsform verlaufen auf den einander gegenüberliegenden Oberflächen des Textillaminats Endlosfäden, von denen jeder Endlosfaden eine Anzahl von in das Textillaminat hineinragenden Schlingen umfasst, die mit den Schlingen eines auf der jeweils gegenüberliegenden Oberfläche des Textillaminats verlaufenden Endlosfadens verschlungen sind.

Vorzugsweise sind die textilen Lagen durch Verpressen mit einer Verbindungsmatrix verbunden, die schichtweise zwischen den einzelnen textilen Lagen angeordnet ist.

In einer Ausführungsform ist die Verbindungsmatrix aus einem Kleber, einem Harz oder einer verpressbaren Folie gebildet.

Ferner sind in einer Ausführungsform die textilen Lagen zumindest teilweise in die Verbindungsmatrix eingebettet. Beispielsweise können die textilen Lagen aus einem Kunststoffmaterial bestehen oder Kunststoffmaterial umfassen. Die textilen Lagen umfassen vorzugsweise Aramid, Kevlar, Polyäthylen oder Kohlefasern oder bestehen hieraus. Es kann auch ein Gemisch aus diesen Materialien Verwendung finden, beispielsweise einem Gemisch aus Aramid und Polyäthylen oder Aramid und Kohlefasern oder Kevlar mit Polyäthylen usw.

Die textilen Lagen umfassen in einer Ausführungsform Gewebe aus Fasern oder Garnen oder sind hieraus gebildet. Vorzugsweise weisen die textilen Lagen unterschiedliche Härten auf. Die unterschiedlichen Härten können in einer Ausführungsform durch die Verwendung unterschiedlicher Gewebearten oder eines unterschiedlichen Harz- oder Klebstoffgehalts der textilen Lagen erreicht werden. In einer Ausführungsform umfasst das Textillaminat in Bezug auf die vorgesehene Beschussrichtung von außen nach innen betrachtet eine Schichtfolge aus harten äußeren textilen Lagen, weichen textilen Lagen, deren Härte geringer ist als diejenige der harten textilen Lagen und mittelharten inneren textilen Lagen, deren Härte zwischen derjenigen der harten und der weichen textilen Lagen liegt.

In einer Ausführungsform sind die Verbinder in einer Richtung der Fläche der textilen Lagen bzw. des Textillaminats mit einem ersten Abstand zueinander versehen und in einer Richtung quer zu dieser Richtung und in der Fläche der textilen Lagen bzw. des Textillaminats mit einem zweiten Abstand voneinander versehen. Der erste Abstand und der zweite Abstand können unterschiedlich zueinander sein.

Die Verbinder können in einer Richtung der Fläche der textilen Lagen durch eine Naht, insbesondere durch eine Nähmaschine, genäht sein, wobei mehrere Nähte nebeneinander in dem zweiten Abstand zu den Stichen in der Naht, vorgesehen sein. Die jeweiligen Stiche von benachbarten Nähten können vorzugsweise auch versetzt zueinander, insbesondere jeweils mittig zu zwei Verbindern einer Naht, angeordnet sein.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: zeigt schematisch einen seitlichen Teilschnitt durch einen ballistischen Schutzhelm, dessen Helmschale durch einen erfindungsgemäßen ballistischen Schutzpanzer gebildet wird;
- Fig. 2: zeigt schematisch eine Draufsicht auf einen Ausschnitt der Helmschalenoberfläche des Helms aus Fig. 1;
- Fig. 3: zeigt schematisch einen Teilschnitt durch eine Helmschale gemäß einer weiteren Ausführungsform der Erfindung;
- Fig. 4: zeigt schematisch eine Draufsicht auf einen Ausschnitt der Helmschale aus Fig. 3;
- Fig. 5: zeigt schematisch die Helmschale gemäß Fig. 3 im verformten Zustand nach dem Einschlag eines Projektils,
- Fig. 6: zeigt schematisch einen Teilschnitt durch eine Helmschale gemäß einer dritten Ausführungsform der Erfindung und
- Fig. 7: zeigt schematisch eine Draufsicht auf einen Ausschnitt eines Schutzpanzers gemäß der Erfindung.

In den Zeichnungen sind jeweils gleiche oder gleichartige Elemente und/oder Teile mit denselben Bezugsziffern versehen, sodass von einer erneuten Vorstellung jeweils abgesehen wird.

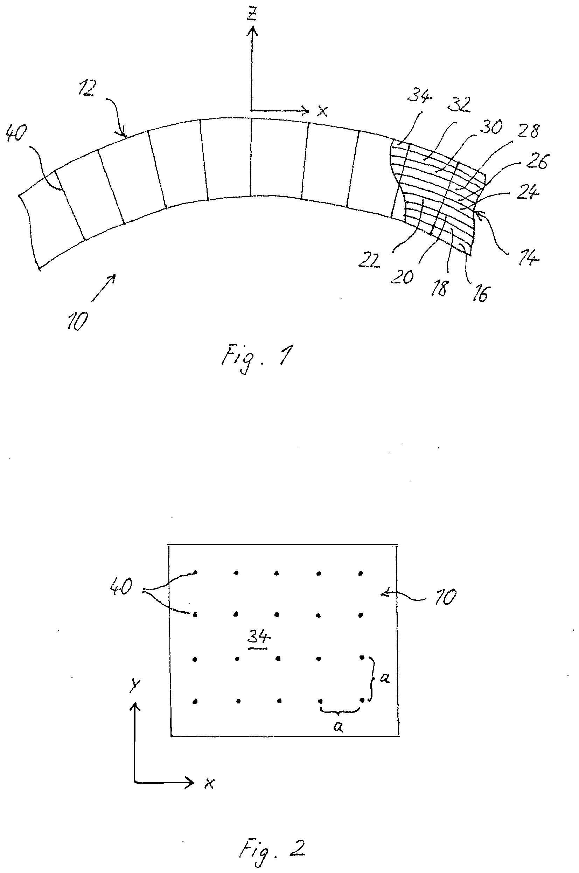

Die in Fig. 1 dargestellte Helmschale 10 ist Bestandteil eines ballistischen Schutzhelms, beispielsweise eines Helms für militärische Einsätze. Die dem nicht dargestellten Kopf des Helmträgers zugewandte konkave Innenseite des Schutzhelms befindet sich in der Figur unten, während der Einschlag eines Projektils von der konvexen Außenseite her erfolgen kann. Der Begriff "Projektil" soll im Folgenden alle möglichen ballistischen Geschosse umfassen, also außer Schusswaffenprojektilen im engeren Sinn auch Granat- oder Geschosssplitter oder dergleichen.

Weitere Einrichtungen im Inneren des Schutzhelms, wie etwa eine an der Innenseite der Helmschale 10 angebrachte korbförmige Auskleidung, die einen Abstand des Kopfes des Helmträgers zur Innenseite der Helmschale 10 gewährleistet und den Tragekomfort erhöht, sind in dieser und den folgenden Figuren nicht dargestellt.

Fig. 1 zeigt die Helmschale 10 im unversehrten Zustand. Sie wird durch einen ballistischen Schutzpanzer 12 gebildet, der ein Textillaminat 14 umfasst, das aus einer Anzahl miteinander laminierter textiler Lagen gebildet wird. Die Lagen erstrecken sich, der Wölbung der Helmoberfläche folgend, parallel aufeinanderliegend zwischen der Innen- und der Außenfläche der Helmschale 10, d.h., die Schichtungsrichtung entspricht der Flächennormalen, die senkrecht auf den Oberflächen der textilen Lagen steht. In Fig. 1 ist die Schichtungsrichtung durch einen Pfeil Z bezeichnet, der der Normalen der Helm-Außenfläche an einem bestimmten Wölbungspunkt entspricht, während sich die einzelnen textilen Lagen in den zur Schichtungsrichtung Z senkrechten X- und Y-Richtungen innerhalb der Helmschale 10 erstrecken. Der Vollständigkeit halber ist die X-Richtung (in Fig. 1 nach rechts) ebenfalls durch einen Pfeil X gekennzeichnet.

Aus Gründen der Übersichtlichkeit sind die textilen Lagen nur in einem in der Figur rechten Bereich im Schnitt dargestellt. Tatsächlich erstrecken sich die Lagen durch die gesamte Helmschale 10. Im Einzelnen handelt es sich bei der hier vorliegenden Ausführungsform um zehn Lagen 16 bis 34, die in der Z-Richtung aufeinandergeschichtet sind. In der Praxis ist es üblich, eine noch größere Anzahl von Lagen zu verwenden; es liegt jedoch im Bereich der Möglichkeiten des Fachmanns, die Zahl der Lagen geeignet zu wählen. Jede der textilen Lagen 16, ... ,34 besteht aus einem Gewebe aus Aramid-, Polyethylen- oder Kohlefasern, also aus einem Kunststoffmaterial mit hoher Zugfestigkeit in der Richtung X bzw. Y, in der sich die Lage erstreckt. Es ist ferner möglich, die textilen Lagen aus Garnen zu weben oder durch andere textile Techniken herzustellen.

Die textilen Lagen 16, ... ,34 werden miteinander laminiert, indem sie mit einer Verbindungsmatrix verpresst werden, die schichtweise zwischen den einzelnen textilen Lagen angeordnet ist. Bei dieser Verbindungsmatrix handelt es sich beispielsweise um einen Kleber, ein Harz oder auch um eine verpressbare Folie. Zur Herstellung des Textillaminats 14 werden somit textile Lagen 16, ... ,34 und Kleber- oder Harzschichten bzw. Folienschichten abwechselnd aufeinandergelegt und unter hohem Druck verpresst, sodass das Textillaminat 14 als Verbund aus textilen Lagen und Verbindungsmatrix entsteht. Die einzelnen Schichten der Verbindungsmatrix sind in Fig. 1 und den folgenden Figuren nicht näher dargestellt. Der Zusammenhalt dieses Lagenpakets 14, d.h., seine Widerstandsfähigkeit gegen Kräfte in Z-Richtung, die auf ein Ablösen der textilen Lagen 16, ... ,34 voneinander wirken, sowie das Gewicht der Helmschale 10 lassen sich durch die Menge des Kleber- oder Harzauftrags bzw. der Dicke der verpressbaren Folie zwischen den textilen Lagen bestimmen. Grundsätzlich gilt, dass die Festigkeit mit zunehmendem Gewichtsanteil der Verbindungsmatrix am Gesamtgewicht anwächst, sodass sich die Festigkeit beispielsweise durch erhöhten Harzauftrag erhöhen lässt. Hierdurch kann beim Verpressen des Laminats der Effekt auftreten, dass das Material der Verbindungsmatrix zumindest teilweise in das Gewebe der textilen Lagen 16, ... ,34 eindringt und die Fasern der textilen Lagen in die Matrix eingebettet werden. Die Möglichkeit der Fasern zur Dehnung in X- bzw. Y-Richtung wird hierdurch jedoch stark eingeschränkt.

Erfindungsgemäß umfasst der ballistische Schutzpanzer 12, der die Helmschale 10 bildet, eine Anzahl draht- oder fadenförmiger Verbinder 40, die sich in der Schichtungsrichtung Z durch das Textillaminat 14 hindurch von der inneren Oberfläche der Helmschale 10 bis zur äußeren Oberfläche erstrecken, also durch alle textilen Lagen 16, ... ,34 hindurch. Diese Verbinder, die in den Richtungen X, Y, in denen sich die textilen Lagen 16, ... ,34 erstrecken, voneinander beabstandet sind, sorgen für einen zusätzlichen Halt der textilen Lagen 16, ... ,34 aneinander. D.h., die Lagen 16, ... ,34 werden nicht ausschließlich durch die Klebekraft der Verbindungsmatrix, sondern zusätzlich mechanisch durch die Verbinder 40 zusammengehalten. Dies sorgt für einen erhöhten Zusammenhalt des Laminats 14 in der Schichtungsrichtung Z und bietet im Fall des Aufpralls eines Projektils vorteilhafte Eigenschaften im Fall der Delamination der inneren textilen Lagen, wie im Folgenden noch näher erläutert werden soll.

Die Verbinder 40, von denen in Fig. 1 lediglich der linke Verbinder 40 mit einer Bezugsziffer versehen ist, können aus einem beliebigen geeigneten Material bestehen, das die gewünschten Eigenschaften aufweist, also insbesondere eine geeignete Zugfestigkeit und Elastizität. Beispielsweise kann für die Verbinder 40 ein Metall oder ein Kunststoffmaterial verwendet werden, und es kann sich um flexible Verstärkungsfäden handeln, die aus einer einzelnen Faser oder auch aus einer Anzahl von Fasern gebildet werden, welche ferner zu einem Garn gesponnen oder gedrillt sein können. In Betracht kommen insbesondere hochfeste Materialien wie etwa Aramid, Polyethylen oder Kohlefasern. Obwohl dies in Fig. 1 nicht dargestellt ist, ist es denkbar, die einzelnen Verbinder 40 an ihren Enden an der Außen- und Innenseite der Helmschale 10 mit Verankerungseinrichtungen wie etwa Verdickungen oder dergleichen zu versehen, die verhindern, dass bei einer Delamination des Textillaminats 14 die Verbinder 40 einfach aus dem Lagenpaket herausgezogen werden.

Damit die Verbinder 40 ihre erfindungsgemäße Funktion erfüllen können, ist es nicht zwangsläufig notwendig, dass die Verbinder 40 sich exakt in der Schichtungsrichtung Z bzw. -Z, also in Richtung der Flächennormalen der textilen Lagen 16, ... ,34 am Durchstoßpunkt des Verbinders 40 erstrecken, sondern es ist ausreichend, dass die Erstreckungsrichtung der Verbinder 40 eine Komponente aufweist, die der Schichtungsrichtung Z entspricht, sodass die textilen Lagen 16, ... ,34 durchstoßen werden. Es ist also zulässig, mit der Normalen einen bestimmten Winkel einzuschließen. Sind solche Abweichungen aus konstruktiven Gründen erwünscht, so lässt sich eine geeignete Größe des Abweichungswinkels vom Fachmann ohne größeren Aufwand durch Versuche ermitteln.

Fig. 2 zeigt eine Draufsicht auf die Helmschale 10 mit den eingesetzten Verbindern 40. In dieser Figur ist also lediglich ein Ausschnitt der Oberfläche der obersten textilen Lage 34 sichtbar, in der die äußersten Enden der draht- oder fadenförmigen Verbinder 40 einliegen. Die Schichtungsrichtung Z weist also in Fig. 2 aus der Zeichnungsebene heraus. Die Verbinder 40 sind in einem regelmäßigen quadratischen Raster angeordnet, d.h., die Verbinder 40 sind sowohl in der X- als auch in der Y-Richtung, entsprechend der Erstreckungsrichtung der textilen Lage 34, um gleiche Abstände a voneinander beabstandet in Reihen angeordnet. Die Abstände a können frei gewählt werden, um den Zusammenhalt des Textillaminats 14 und dessen Delaminationsverhalten zu beeinflussen.

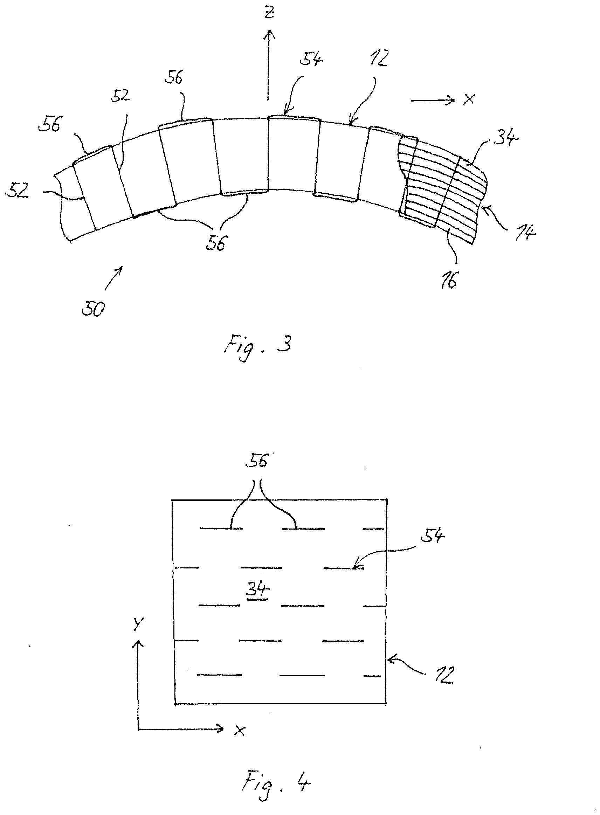

Fig. 3 zeigt einen seitlichen Teilschnitt durch eine weitere Helmschale 50, die ebenfalls aus einem Textillaminat 14 aus einzelnen textilen Lagen 16, ... ,34 aufgebaut ist. Der Aufbau der einzelnen Lagen 16, ... ,34 aus einem hochfesten Gewebe, ihre Schichtung in Z-Richtung und ihre Verbindung durchschichtweises Verpressen mit einer Verbindungsmatrix entsprechen der Helmschale 10 aus Fig. 1 und 2, sodass bezüglich des Aufbaus des Textillaminats 14 auf die vorstehenden Beschreibungsteile verwiesen wird.

Erfindungsgemäß umfasst die Helmschale 50 fadenförmige Verbinder, die hier durch in der Schichtungsrichtung Z verlaufende Abschnitte 52 eines Verstärkungsfadens 54 gebildet werden, der als Endlosfaden zwischen der inneren und der äußeren Oberfläche der Helmschale 50 mäandrierend in der Richtung X durch das Textillaminat 14, also in der Richtung, in der sich die textilen Lagen 16, ... ,34 erstrecken, läuft. Auf der linken Seite in Fig. 3 beginnend erstreckt sich also zunächst ein in der Schichtungsrichtung Z verlaufender Verstärkungsfaden-Abschnitt 52 von innen nach außen, an welchem sich ein auf der äußeren Oberfläche der Helmschale 50 aufliegender Verbindungsabschnitt 56 des Verstärkungsfadens 54 anschließt. An diesen schließt sich wiederum ein von außen nach innen (Gegenrichtung -Z) verlaufender Verstärkungsfaden-Abschnitt 52 an, gefolgt von einem auf der Helmschalen-Innenseite aufliegenden Verbindungsabschnitt 56. Diese Abfolge von Abschnitten des Verstärkungsfadens 54 zwischen Innen- und Außenseite wiederholt sich von hier an fortlaufend in der Erstreckungsrichtung X der textilen Lagen 16, ... ,34. Die einzelnen Verstärkungsfaden-Abschnitte 52, die die Verbinder bilden, sind somit durch die Verbindungsabschnitte 56 zu einem Endlosfaden verbunden, der eine Naht bildet, die das gesamte Textillaminat 14 bzw. die Helmschale 50 durchlaufen kann. Der Verstärkungsfaden 54 kann straff gespannt sein, sodass den einzelnen textilen Lagen 16,... ,34 ein erhöhter Zusammenhalt verliehen wird.

Es kann sich bei dem Verstärkungsfaden 54 um eine Textilfaser aus einem hochfesten Kunststoffmaterial wie etwa Aramid, Polyethylen oder Kohlefaser handeln, und mehrere Fasern des Verstärkungsfadens 54 können zu einem Garn gesponnen oder gedrillt sein. Grundsätzlich können für die Verbinder 40 aus der ersten Ausführungsform und für den Verstärkungsfaden 54 bzw. dessen als Verbinder wirkende Abschnitte 52 die gleichen Materialien verwendet werden. Da im Fall des endlosen Verstärkungsfadens 54 jeweils ein Umlenken des Fadenverlaufs auf den Innen- und Außenoberflächen der Helmschale 50 stattfindet, ist eine gewisse Biegsamkeit und Flexibilität des Fadenmaterials erforderlich.

Fig. 4 zeigt eine Draufsicht auf einen Ausschnitt der äußersten textilen Lage 34 aus einer Perspektive entsprechend Fig. 2. Auf der Oberfläche der textilen Lage 16 sind die aufliegenden Verbindungsabschnitte 56 des Verstärkungsfadens 54 zu erkennen, während sich die Verstärkungsfaden-Abschnitte 52 in und entgegen der Schichtungsrichtung (Richtungen Z und -Z) an den Enden der Verbindungsabschnitte 56 in das Textillaminat 14 hinein und wieder heraus erstrecken. Die Nähte der Endlosfäden 54 verlaufen in Fig. 4 von links nach rechts, und die Verbindungsabschnitte 56 weisen auf der Innen- und Außenseite der Helmschale 50 die gleiche Länge auf. In der Richtung senkrecht zur Verlaufsrichtung der Nähte sind die Endlosfäden 54 voneinander beabstandet, und die Verbindungsabschnitte 56 einander benachbarter Verbindungsfaden 54 sind in der Verlaufsrichtung der Nähte jeweils um die Länge eines Verbindungsabschnitts 56 gegeneinander versetzt.

Es versteht sich, dass auch ein anderer Nahtverlauf gewählt werden kann, beispielsweise durch Schlingenbildung innerhalb des Verlaufs des Verstärkungsfadens 54, wie später noch erläutert werden soll. Ferner ist es, ähnlich wie bei der zuvor beschriebenen Ausführungsform, nicht notwendig, dass sich die Verstärkungsfaden-Abschnitte 52 genau in der Richtung der Flächennormalen erstrecken, sondern es werden Abweichungen von dieser Richtung toleriert. Beispielsweise können aufeinanderfolgende Verstärkungsfaden-Abschnitte 52 auf solche Weise gegeneinander geneigt sein, dass sich in der senkrechten Schnittebene durch das Laminat 14 ein W- oder zickzackförmiger Nahtverlauf ergibt.

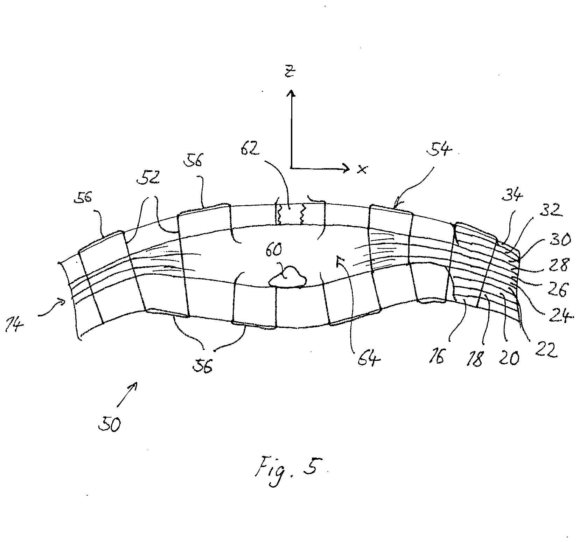

In Fig. 5 ist das Funktionsprinzip des erfindungsgemäßen ballistischen Schutzpanzers anhand des zweiten Ausführungsbeispiels aus den Fig. 3 und 4 erläutert. Im vorliegenden Fall wird angenommen, dass die Helmschale 50 mit einem Projektil 60 beschossen wird, das genau senkrecht auf die Helmschale 50 trifft, also in einer Beschussrichtung -Z. Beim Aufprall durchschlägt das Projektil 60 eine Anzahl äußerer textiler Lagen, wobei die Fasern innerhalb der textilen Lagen glatt abgeschert werden und ein annähernd zylindrischer Beschusskanal 62 entsteht. Hierbei verformt sich das Projektil 60 stark, und seine kinetische Energie wird teilweise absorbiert, bis die Energie nicht mehr dazu ausreicht, weitere Lagen zu durchschlagen. Dies führt dazu, dass in den verbleibenden textilen Lagen an der Innenseite der Helmschale 50 eine Verformung in Form einer Ausbeulung nach innen entsteht, da das Projektil 60 durch seine Restenergie die Fasern der nicht durchschlagenen textilen Lagen dehnt. Das Projektil 60 verbleibt dann innerhalb einer Kaverne 64 zwischen den äußeren und den inneren textilen Lagen. Diese Kaverne 64 entsteht dadurch, dass die äußeren durchschlagenen textilen Lagen ihre nach außen gewölbte Form im Prinzip beibehalten, während durch die Verformung der inneren Lagen ein Ablösungs- oder Delaminationseffekt entsteht, bei dem sich die äußeren und inneren Lagenpakete im Umfeld des Beschusskanals 62 voneinander lösen.

In Fig. 5 werden die drei äußersten textilen Lagen 30,32,34 glatt durchschlagen, und in ihnen bildet sich der Beschusskanal 62, während die vier innersten Lagen 16 bis 22 nach innen ausgebeult werden. Das Gewebe dieser textilen Lagen 16 bis 22 bleibt dabei intakt, es werden lediglich die Fasern des Gewebes gedehnt, sodass die Ausbeulung zur Innenseite der Helmschale 50 gebildet wird. Zwischen den durchschlagenen Lagen 30,32,34 und den verformten Lagen 16 bis 22, die auch als Fanglagen bezeichnet werden, verbleiben drei textile Lagen 24, 26, 28, die im unmittelbaren Umfeld des Beschusskanals 62 zerstört werden und hierdurch Energie absorbieren.

Beim Abreißen der Fanglagen 16 bis 22 wird der innere Zusammenhalt des Textillaminats 14 durch die Verbindungsmatrix zerstört, und es besteht die Gefahr, dass durch ein unkontrolliertes Abreißen der Schichten voneinander eine sehr starke Ausbeulung entsteht, die Verletzungen des Helmträgers verursacht. Erfindungsgemäß wird dieser nachteilige Effekt durch den Verstärkungsfaden 54 verhindert. Die in der Schichtungsrichtung Z verlaufenden Abschnitte 52 des Verstärkungsfadens 54 können die beim Einschlag auftretenden Zugkräfte in der Z-Richtung aufnehmen, was zu einer Dehnung des Verstärkungsfadens 54 an den Abschnitten 52 führt, sodass zusätzlich Energie absorbiert wird. Überschreiten die Kräfte einen bestimmten Wert, so kommt es zu einem Abreißen des Verstärkungsfaden-Abschnitts 52. Da die Kraft in seitlicher, also in X- und Y-Richtung in Bezug auf die Beschussrichtung abnimmt, tritt dieser Effekt des Abreißens nur im Umfeld des Beschusskanals 62 auf, wie es in Fig. 5 auch dargestellt ist. In größerer Entfernung vom Beschusskanal 62 nehmen die Zugkräfte ab und können von den Verstärkungsfaden-Abschnitten 52 noch aufgenommen werden, ohne dass ein Abreißen des Fadens 54 stattfindet. Auf diese Weise wird verhindert, dass die Klebeschicht der Verbindungsmatrix zwischen den durchschlagenen Lagen 30, 32, 34 und den Fanglagen 16 bis 22 unkontrolliert aufreißt. Die Verstärkungsfaden-Abschnitte 52 an den Außenbereichen der Kaverne 64 begrenzen den Delaminationseffekt zuverlässig. Die Aufnahme der Zugkräfte durch die Verstärkungsfaden-Abschnitte 52 wird dadurch begünstigt, dass die äußeren Enden der Abschnitte 52 in den äußeren textilen Lagen 30, 32, 34 verankert sind, die ihre gewölbte Form beibehalten und somit eine hohe Stabilität gegenüber den durch die Verstärkungsfaden-Abschnitte 52 ausgeübten Zugkräften aufweisen. Durch diesen Verankerungseffekt in den äußeren Lagen 30, 32, 34 wird den Abschnitten 52 und somit dem nach innen verformten Bereich der inneren Fanglagen 16 bis 22 ein erhöhter Halt geboten.

Es versteht sich, dass die Wirkung der erfindungsgemäßen Verbinder in Fig. 5 nur beispielhaft anhand der Verstärkungsfaden-Abschnitte 52 dargestellt ist und durch alle Arten von Verbindern im Sinne der vorliegenden Erfindung gleichermaßen bewirkt wird, also insbesondere auch durch die Verbinder 40 gemäß der ersten Ausführungsform.

Die Energie-Absorption innerhalb des Textillaminats 14 lässt sich dadurch vorteilhaft vergrößern, dass die äußeren Lagen 30, 32, 34, in denen der Beschusskanal 62 gebildet wird, sehr hart ausgebildet sind, im Vergleich zu den darauffolgenden mittleren Lagen 24, 26, 28, die im Bereich der Kaverne 64 zerstört werden und hierdurch Energie aufnehmen können. Durch die große Härte der äußeren Schichten 30, 32, 34 wird das Projektil 60 sehr stark verformt und muss einen größeren Einschusskanal bilden, damit es tiefer in das Textillaminat 14 eindringen kann. Die Härte der Fanglagen 16 bis 22 an der Innenseite der Helmschale 50 ist hierbei vorteilhaft so zu wählen, dass sie zwischen der Härte der äußeren Lagen 30, 32, 34 und derjenigen der weichen mittleren Lagen 24, 26, 28 liegt, sodass eine gute Verformbarkeit gewährleistet bleibt. Die Härten der unterschiedlichen Lagen 16, ... , 34 lassen sich durch die Wahl des Gewebes beeinflussen, insbesondere jedoch ferner durch den Harz- oder Klebstoffanteil der Verbindungsmatrix in den textilen Lagen 16, ... , 34.

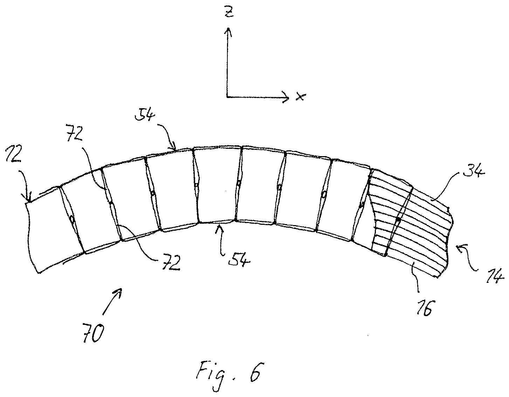

Schließlich zeigt Fig. 6 eine Helmschale 70 ähnlich der Helmschale 50 aus den Fig. 3 bis 5, bei welcher die Nähte der Verstärkungsfaden 54 einen anderen Verlauf aufweisen. Auf den einander gegenüberliegenden Oberflächen des Textillaminats 14 verlaufen Verstärkungsfäden 54 als Endlosfäden, von denen jeder Endlosfaden eine Anzahl von in das Textillaminat 14 hineinragenden Schlingen 72 umfasst, die mit den Schlingen 72 eines auf der jeweils gegenüberliegenden Oberfläche des Textillaminats 14 verlaufenden Endlosfadens verschlungen sind. Das heißt, die Schlingen 72 des auf der Außenseite der Helmschale 70 aufliegenden Verstärkungsfadens 54 weisen durch einen nicht näher dargestellten Kanal entgegen der Schichtungsrichtung Z in das Textillaminat 14 hinein und greifen im Bereich der mittleren textilen Lagen in die Schlingen 72 eines weiteren Endlosfadens 54 ein, der in gleicher Weise auf der Helm-Innenseite verläuft. Jeweils zwei miteinander verschlungene Schlingen 72 bilden somit einen erfindungsgemäßen Verbinder. Die Schlingen 72 können mehr oder weniger straff miteinander verspannt sein, sodass sich die elastischen Eigenschaften der Verspannung einstellen lassen.

Ein ballistischer Schutzpanzer 12 der hier beschriebenen Art eignet sich nicht nur für Helmschalen 10, 50 ballistischer Schutzhelme, sondern auch für andere Arten ballistischer Schutzkleidung, insbesondere für Schutzwesten, die ihren Träger gegen Projektil- oder Splitterbeschuss schützen sollen. Da solche Schutzwesten aus Gründen des Tragekomforts eine gewisse Flexibilität aufweisen müssen, umfassen die bekannten Westen in der Regel Hartsegmente oder Harteinschübe an besonders gefährdeten Stellen. Diese Hartsegmente oder -einschübe können ebenfalls durch den erfindungsgemäßen ballistischen Schutzpanzer gebildet werden. Damit ein lückenloser Schutz gewährleistet wird, ohne dass die Bewegungsfreiheit des Trägers der Weste eingeschränkt wird, ist eine Anordnung vorteilhaft, bei der die Hartsegmente oder Harteinschübe einander überlappen, jedoch gegeneinander verschiebbar sind oder ineinandergreifen.

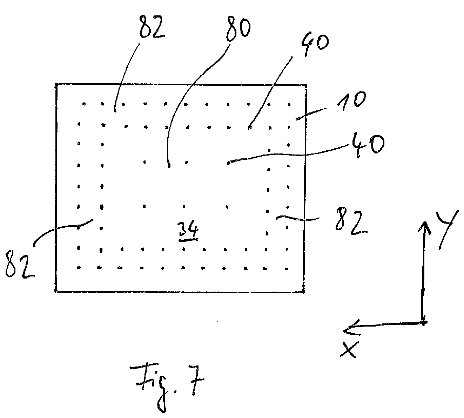

Fig. 7 zeigt schematisch eine Draufsicht auf einen erfindungsgemäßen Schutzpanzer. Es ist das Textillaminat in einer Draufsicht schematisch gezeigt und eine Anordnung von Verbindern 40 in diesem Textillaminat. In einer Richtung X sind die Verbinder mit einem ersten Abstand und in der Richtung Y in einem zweiten Abstand voneinander angeordnet. In dem Ausführungsbeispiel der Fig. 7 sind die Verbinder einer Naht bzw. in einer Richtung versetzt zu den Verbindern einer benachbarten Naht bzw. einer benachbarten Reihe von Verbindern. Durch diese Anordnung ist eine sehr hohe Flächendichte von Verbindern ermöglicht.

Als Beispiel für einen Abstand der Verbinder in einer Naht bzw. in einer Richtung können 2,5 bis 7,0 mm bevorzugt sein und in der anderen Richtung auch 2,5 bis 7,0 mm, wobei die Abstände gleich oder unterschiedlich sein können.

In Fig. 7 ist ein Randbereich 82 gezeigt, in der die Verbinder an drei Kanten versetzt zueinander angeordnet sind und enger zueinander als in einem zentralen Bereich 80.

Durch die Erfindung wird ermöglicht, den Nahtabstand bzw. den Abstand der Verbinder für den ballistischen Schutzpanzer zu optimieren. Bei einem großen Abstand der Verbinder wird durch Einwirkung eines Projektils schneller eine Delaminierung stattfinden. Bei einer sehr engen Anordnung der Verbinder bzw. einer höheren Flächendichte der Verbinder ist die Delaminierung verringert. Es kann allerdings bei einer zu hohen Flächendichte dazu kommen, dass das Projektil den ballistischen Schutzpanzer durchdringt. Insofern dient der erfindungsgemäße ballistische Schutzpanzer dazu, eine Optimierung vorzusehen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Helmschale
- 12: Schutzpanzer
- 14: Textillaminat
- 16-34: textile Lagen
- 40: Verbinder
- 50: Helmschale
- 52: Verstärkungsfaden-Abschnitt
- 54: Verstärkungsfaden
- 56: Verbindungsabschnitt
- 60: Projektil
- 62: Beschusskanal
- 64: Kaverne
- 70: Helmschale
- 72: Schlinge
- 80: zentraler Bereich
- 82: Randbereich

## Patentansprüche

1. Ballistischer Schutzpanzer (12), insbesondere als Bestandteil ballistischer Schutzbekleidung oder Kopfbedeckung (10), umfassend ein Textillaminat (14) aus einer Mehrzahl miteinander laminierter textiler Lagen (16, ..., 34), wobei eine Mehrzahl draht- oder fadenförmiger Verbinder (40, 52) vorgesehen ist, die sich in der Schichtungsrichtung (Z) der textilen Lagen (16, ..., 34) durch das Textillaminat (14) wenigstens teilweise hindurch erstrecken, **dadurch gekennzeichnet, dass** wenigstens bereichsweise eine mittlere Flächendichte von Verbindern (40, 52), insbesondere quer zur Schichtungsrichtung, von zwischen 180 Verbindern / dm² bis 800 Verbindern / dm², insbesondere zwischen 200 Verbindern / dm² bis 700 Verbindern / dm², insbesondere zwischen 250 Verbindern / dm² und 600 Verbindern / dm², insbesondere zwischen 280 Verbindern / dm² und 500 Verbindern / dm², insbesondere zwischen 300 Verbindern / dm² und 450 Verbindern / dm², vorgesehen ist.

2. Ballistischer Schutzpanzer (12) nach Anspruch 1, **dadurch gekennzeichnet, dass** der Abstand der Verbinder (40, 52) in einer ersten Richtung (X) der Fläche, die quer zur Schichtungsrichtung (Z) der textilen Lagen (16, ..., 34) ist, unterschiedlich zu einer zu der ersten Richtung (X) quer, insbesondere senkrecht, angeordneten Richtung (Y) der Fläche, die quer zur Schichtungsrichtung (Z) der textilen Lagen (16, ..., 34) ist.

3. Ballistischer Schutzpanzer (12) nach Anspruch 1 oder 2, **dadurch gekennzeichnet, dass** die mittlere Flächendichte von Verbindern (40, 52) im Schutzpanzer (12) unterschiedlich ist.

4. Ballistischer Schutzpanzer (12) nach Anspruch 3, **dadurch gekennzeichnet, dass** die mittlere Flächendichte von Verbindern (40, 52) in einem zentralen Bereich (80) des Schutzpanzers (12) kleiner ist als in einem Randbereich (82) des Schutzpanzers (12).

5. Ballistischer Schutzpanzer (12) nach einem der Ansprüche 1 bis 4, **dadurch gekennzeichnet, dass** die Anzahl der textilen Lagen (16, ..., 34) im Schutzpanzer (12) bereichsweise unterschiedlich ist.

6. Ballistischer Schutzpanzer (12) nach Anspruch 5, **dadurch gekennzeichnet, dass** die Anzahl der textilen Lagen (16, ..., 34) in einem zentralen Bereich (80) des Schutzpanzers (12) kleiner ist als in einem Randbereich (82) des Schutzpanzers (12).

7. Ballistischer Schutzpanzer (12) nach einem der Ansprüche 1 bis 6, **dadurch gekennzeichnet, dass** die Verbinder (40, 52) in den textilen Lagen (16, ..., 34) vernäht sind.

8. Ballistischer Schutzhelm (12) mit einer Helmschale (10, 50, 70), die einen ballistischen Schutzpanzer (12) nach einem der Ansprüche 1 bis 7 umfasst oder aus einem ballistischen Schutzpanzer (12) gemäß einem der Ansprüche 1 bis 7 besteht.

9. Ballistische Schutzweste, umfassend Hartsegmente oder Harteinschübe, die einen ballistischen Schutzpanzer (12) gemäß einem der Ansprüche 1 bis 7 umfassen oder aus diesem bestehen.
